# EUROPÄISCHE PATENTSCHRIFT

(11) **EP 0 359 009 B1**
(45) Veröffentlichungstag und Bekanntmachung des Hinweises auf die Patenterteilung: **14.04.1993**
(21) Anmeldenummer: 89115732.3
(22) Anmeldetag: 25.08.1989
(51) Int. Cl.: B60D 1/02

(54) **Befestigungsvorrichtung für ein lösbar an einem Kraftfahrzeug anbringbares Teil**
Securing device for a disconnectible hitch at a motor vehicle
Dispositif de fixation pour un attelage démontable de véhicule automobile

(30) Priorität: 07.09.1988 DE 3830426
(43) Veröffentlichungstag der Anmeldung: 21.03.1990
(73) Patentinhaber: Rumpp, Gerhard, D-82266 Inning (DE)
(72) Erfinder: Rumpp, Gerhard, D-82266 Inning (DE)
(74) Vertreter: Grünecker, Kinkeldey, Stockmair & Schwanhäusser Anwaltssozietät

(56) Entgegenhaltungen:
- DE-U- 1 633 580
- DE-U- 8 220 125
- US-A- 2 355 695
- US-A- 3 330 579
- US-A- 3 503 626

## Beschreibung

Die Erfindung bezieht sich auf eine Befestigungsvorrichtung der im Oberbegriff des Patentanspruchs 1 genannten Art.

Eine solche, aus der DE-A-35 12 981 bekannte Befestigungsvorrichtung weist als Aufnahmeteil einen Kupplungswechselrahmen auf, der mit Hinterschneidungen versehen ist. Die mit diesem Kupplungswechselrahmen lösbar zu verbindenden unterschiedlichen Teile sind unterschiedlich ausgebildete Kupplungen, wie z.B. ein Kugelkopf oder eine Öse, wobei diese unterschiedlichen Kupplungen mit das Eingriffsteil bildenden Profilteilen versehen sind, die in die Hinterschneidungen des Kupplungswechselrahmens formschlüssig eingreifen. Die Kupplungen werden dann über Bolzen und Muttern mit dem Kupplungswechselrahmen verspannt.

Aufgabe der Erfindung ist es, eine Befestigungsvorrichtung der im Oberbegriff des Patentanspruchs 1 genannten Art so auszubilden, daß diese ein selbsttätiges Verriegeln zwischen Aufnahmeteil und Eingriffsteil beim Einführen des Eingriffsteils in das Aufnahmeteil und anschließend ein einfaches Verspannen beider Teile miteinander ermöglicht.

Bei einer Befestigungsvorrichtung der genannten Art ist diese Aufgabe durch die im kennzeichnenden Teil des Patentanspruchs 1 angegebenen Merkmale gelöst.

Die erfindungsgemäße Befestigungsvorrichtung zeichnet sich dadurch aus, daß das Aufnahmeteil mit dem Eingriffsteil nach dem bekannten Prinzip einer Kupplungsmaul-Bolzen-Anordnung aufgebaut ist, wobei das Kupplungsmaul und ein dieses durchsetzender erster im wesentlichen vertikaler Bolzen im Aufnahmeteil und ein mit einer Öffnung versehener, sich im wesentlichen in horizontaler Richtung erstreckender zweiter Bolzen am Eingriffsteil vorgesehen sind. Im Bereich der Öffnung des zweiten Bolzens ist der erste Bolzen mit einem Exzenter versehen bzw. exzentrisch ausgebildet, so daß er bei seiner Drehung den zweiten Bolzen in das Kupplungsmaul hineinzieht und am Kupplungsmaul einerseits und dem Eingriffsteil andererseits vorgesehene, miteinander korrespondierende Spannflächen aufeinanderpreßt. Zu diesem Zweck ist eine Rasteinrichtung vorgesehen, die in ihrer Wirkstellung eine Drehung des ersten Bolzen nur in einer Drehrichtung zuläßt, in welcher der Spannvorgang erfolgt.

Mit Hilfe von in den Unteransprüchen angegebener Weiterbildungen der Erfindung ist ein schwenkbarer Hebel vorgesehen, der in einer Sperrstellung eine vertikale Verschiebung des ersten Bolzens aus dessen Spannstellung, in der die Rasteinrichtung wirksam ist, und in einer Entriegelungsstellung bei angehobenem ersten Bolzen dessen Abwärtsbewegung verhindert. Der erste Bolzen ist mit Hilfe einer ersten Feder in Richtung seiner Spannstellung vorgespannt, während der schwenkbare Hebel mit Hilfe einer zweiten Feder in Richtung seiner Entriegelungsstellung vorgespannt ist. Bei nicht in das Kupplungsmaul eingeführtem zweiten Bolzen befindet sich der schwenkbare Hebel in seiner Entriegelungsstellung, wodurch sich der erste Bolzen in seiner angehobenen Stellung befindet. Beim Einführen des zweiten Bolzens in das Kupplungsmaul wird der schwenkbare Hebel durch das Zusammenwirken des zweiten Bolzens mit einer Anschlagkante des Hebels in seine Sperrstellung geschwenkt, wodurch sich der erste Bolzen unter der Wirkung der ersten Feder in seine Spannstellung in vertikaler Richtung nach unten verschiebt, wobei er gleichzeitig die Öffnung in dem zweiten Bolzen durchdringt. Dadurch gelangt die Rasteinrichtung in ihre Wirkstellung und der Exzenter des ersten Bolzens in den Bereich der Öffnung des zweiten Bolzens. Mit Hilfe eines eine im oberen Teil des ersten Bolzens vorgesehene Durchgangsbohrung durchdringenden Steckschlüssels wird dann der erste Bolzen in die durch die Rasteinrichtung zugelassene Drehrichtung gedreht, wodurch mit Hilfe des Exzenters der Zweite Bolzen in das Kupplungsmaul hineingezogen und damit das Aufnahmeteil mit dem Eingriffsteil verspannt werden.

Ein Ausführungsbeispiel der Erfindung wird anhand der Zeichnung erläutert. Im einzelnen zeigt:
- Fig. 1: die in Form einer sich etwa vertikal erstreckenden Stütze ausgebildete Befestigungsvorrichtung in Verbindung mit einer Grundplatte und
- Fig. 2: die in Fig. 1 dargestellte Stütze aus einer anderen Sicht.

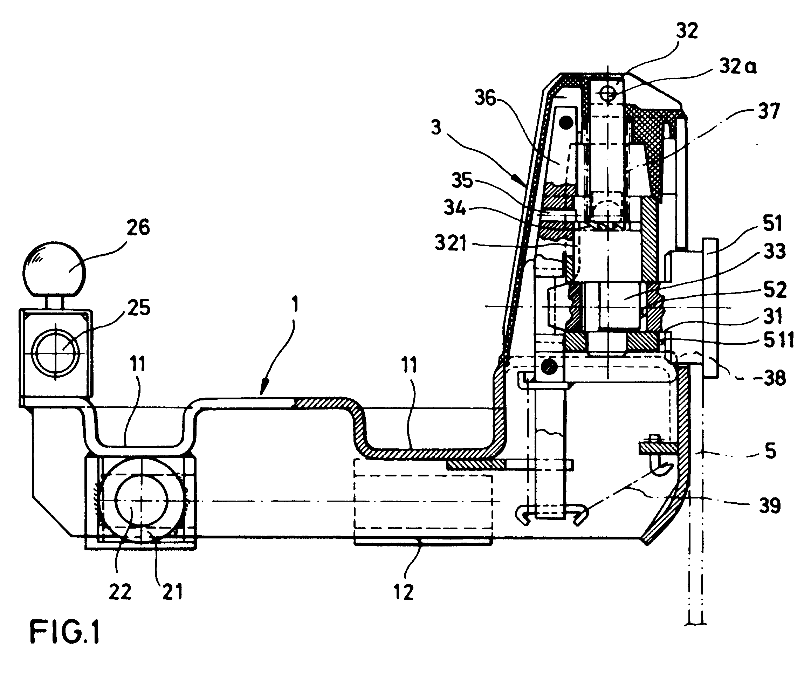

In Fig. 1 ist eine als Stütze ausgebildete Befestigungsvorrichtung 3 in Verbindung mit einer Grundplatte 1 gezeigt, die an einem Kraftfahrzeug, insbesondere einem Geländewagen, anzubringen ist, um über diese Grundplatte 1 verschiedene Vorsatzelemente, Vorsatzgeräte und Arbeitsgeräte mit dem Fahrzeug wahlweise verbinden zu können.

Unterhalb der in Fig. 1 linksseitigen und bei Anbringung der Grundplatte an eine Fahrzeug fahrzeugseitigen Ausformung 11 sind an der Grundplatte 1 links und rechts Lagerbuchsen 21 angeschweißt, von denen in Fig. 1 nur eine zu erkennen ist. In den Lagerbuchsen 21 sind jeweils erste Bolzen 22 gelagert die, die links und rechts jeweils in Bohrungen von Fahrzeugrahmen-Längsträgern angreifen, wodurch die Grundplatte 1 am Fahrzeugrahmen schwenkbar festgelegt wird.

Links und rechts auf der Grundplatte 1 sind federbeaufschlagte, axial verschiebliche Bolzen 25 gelagert, die in im Fahrzeugrahmen vorgesehene Bohrungen bzw. Buchsen eingreifen, um die Grundplatte in ihrer im wesentlichen horizontalen Gebrauchsstellung zu arretieren. Diese Bolzen 25 können mit Hilfe einer Handhabung 26 gegen die Kraft einer Druckfeder außer Eingriff zum Fahrzeugrahmen gebracht werden, um dann die Grundplatte 1 um die Bolzen 21 nach unten schwenken zu können.

Unterhalb der Grundplatte 1 im Bereich der rechtsseitigen Ausformung 11 ist eine Befestigungshülse 12 angeschweißt, die mit der Fahrzeuglängsachse im wesentlichen fluchtet. Die Befestigungshülse 12 nimmt einen weiteren Bolzen auf, der einen zusätzlichen Befestigungspunkt für mit dem Fahrzeug lösbar zu verbindenden Teile bildet.

Einzelheiten dieser Grundplatte sowie der mit dem Fahrzeug zu verbindenden Teile sind in der korrespondierenden europäischen Patentanmeldung EP-A 89 115 735.6 beschrieben.

Die in Form in einer im wesentlichen vertikalen Stütze ausgebildete Befestigungsvorrichtung 3 weist ein Kupplungsmaul 31 auf, in das von einer vom Fahrzeug abgewandten Seite aus ein Eingriffsteil einführbar ist. Das im wesentlichten durch die Stütze gebildete Aufnahmeteil weist außer dem Kupplungsmaul 31 eine vertikal verlaufende Führung für einen ersten Bolzen 32 auf, der in dieser Führung drehbar und in vertikaler Richtung verschiebbar geführt ist. Das Eingriffsteil umfaßt eine sogenannte Adapterplatte 5 und einen zweiten Bolzen 51, der in Fig. 1 in seiner in das Kupplungsmaul 31 eingeführten Stellung gezeigt ist. Wie dieses in der vorstehend genannten Offenlegungssschrift im einzelnen erläutert ist, weist die Adapterplatte 5 vorzugsweise zwei dieser zweiten Bolzen 51 auf, die mit zwei mit der Grundplatte 1 verbundenen Befestigungsvorrichtungen 3 jeweils zusammenwirken.

Im Bereich einer Öffnung 52 des zweiten Bolzens 51 weist der erste Bolzen 32 einen Exzenter 33 auf. Außerdem sind an der Mantelfläche des ersten Bolzens 32 Zähne 34 ausgeformt, die zusammen mit einem in horizontaler Richtung verschiebbaren Sperrstift 35 eine Rasteinrichtung bilden. Der Sperrstift 35 ist in einem schwenkbaren Hebel 36 gelagert, um in die Zähne 34 in der in Fig. 1 gezeigten Stellung des Hebels 36 einzugreifen. Der schwenkbare Hebel 36 weist unterhalb des ersten Bolzens 32 einen sich in Querrichtung erstreckenden Hebelteil auf, der an seinem der Mündung des Kupplungsmauls 31 zugewandten Ende eine Anschlagkante 38 aufweist, die mit einer zylindrischen Schulter 511 des des zweiten Bolzens 51 zusammenwirkt.

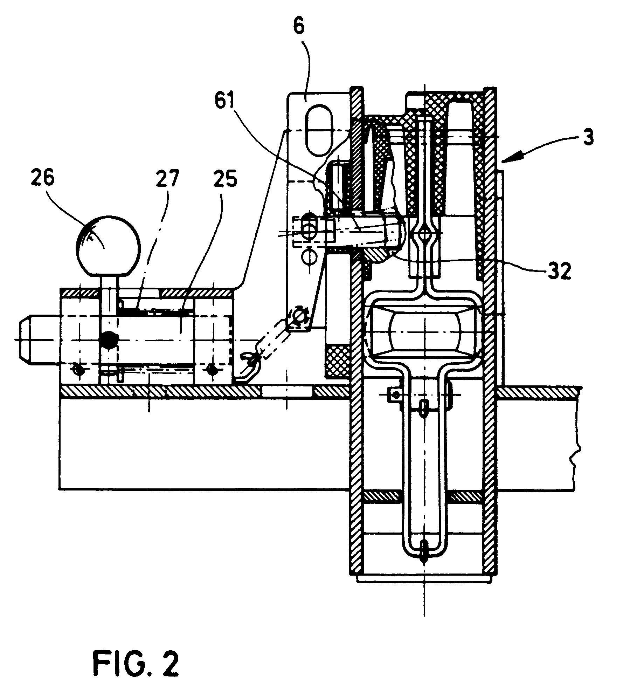

Wie in Fig. 2 zu erkennen ist, ist an der Stütze 3 ein zweiter Hebel 6 in einer im wesentlichen vertikalen Ebene schwenkbar so angelenkt, daß die beiden Schwenkebenen des ersten und zweiten Hebels im wesentlichen senkrecht zueinander verlaufen. Der zweite Hebel 6 wirkt mit einem weiteren Bolzen 61 zusammen, der in der in Fig. 2 gezeigten Verriegelungsstellung des zweiten Hebels 6 formschlüssig in den ersten Bolzen 32 derart eingreift, daß eine Vertikalbewegung des ersten Bolzens 32 verhindert wird. Der zweite Hebel 6 kann von Hand aus seiner Verriegelungsstellung, in der er an der Stütze 3 anliegt, in eine Entriegelungsstellung geschwenkt werden, in welcher der weitere Bolzen 61 außer Eingriff mit dem ersten Bolzen 32 gelangt, so daß eine Vertikalbewegung des ersten Bolzens möglich ist.

Nachfolgend wird die Arbeitsweise der Befestigungsvorrichtung erläutert:
In Fig. 2 befindet sich die Befestigungsvorrichtung in der verriegelten Lage, in welcher sich der erste Bolzen 32 mit seinem Exzenter 33 in seiner Spannstellung, der erste Hebel 36 sich in seiner Sperrstellung und der zweite Hebel 6 sich in seiner Verriegelungsstellung befinden.

Um die Befestigungsvorrichtung zu entriegeln, wird zuerst der zweite Hebel 6 von Hand von der Stütze 3 fortgeschwenkt, wodurch der weitere Bolzen 61 außer Eingriff mit dem ersten Bolzen 32 gelangt. Die fortgeschwenkte Lage des zweiten Hebels 6 signalisiert diese Entriegelungsstellung. Der sich in der Durchgangsbohrung 32a des ersten Bolzens 32 befindende Steckschlüssel wird im Uhrzeigersinn gedreht, um die mit dem Exzenter 33 vorgenommene Spannung zwischen zweiten Bolzen 51 und ersten Bolzen 32 zu losen, wozu in hier nicht dargestellter Weise die Rasteinrichtung gelöst wird, um die Drehung im Uhrzeigersinn zuzulassen. Dann wird der erste Bolzen 32 mit Hilfe des Steckschlüssels von Hand kräftig nach oben gezogen, bis sich der Sperrstift 35 unter einen sich oberhalb des Exzenters des ersten Bolzens 32 befindlichen Bund legt. In dieser Stellung ist der Exzenterbolzen mit Hilfe der Feder 37 zwar in seine Spannstellung vorgespannt, an einer Abwärtsbewegung durch den Sperrstift 35 jedoch gehindert. Jetzt kann der zweite Bolzen 51 aus dem Kupplungsmaul 31 herausgezogen werden, so daß gleichzeitig die mit dem zweiten Bolzen 51 verbundene Adapterplatte 5 und mit dieser verbundene Vorsatzelemente oder Vorsatzgeräte von dem Fahrzeug entfernt werden können. Nach dem Entfernen des zweiten Bolzens 51 wird der untere Teil des Hebels 36 mit Hilfe der zweiten Feder 39 in Fig. 1 nach rechts geschwenkt, wodurch der sich quer erstreckende Teil des Hebels 36 mit der Anschlagkante 38 unmittelbar hinter die Mündung des Kupplungsmauls 31 gelangt. Damit befindet sich die Befestigungsvorrichtung in ihrer entriegelten Bereitschaftsstellung zur Aufnahme des Eingriffsteils, d.h. des zweiten Bolzens 51. Diese Stellung wird nach außen durch den fortgeschwenkten zweiten Hebel 6 signalisiert.

Wird jetzt der zweite Bolzen 51 in das Kupplungsmaul 31 der Stütze 3 eingeführt, bzw. gleichzeitig zwei mit der Adapterplatte 5 verbundene zweite Bolzen 51 in zwei mit der Grundplatte 1 verbundene Stützen 3 eingeführt, so wird unmittelbar vor vollständigem Einführen des zweiten Bolzens 51 von seiner zylindrischen Kante 511 die Anschlagkante 35 des Hebels 36 beaufschlagt, wodurch dieser gegen die Kraft der zweiten Feder 39 aus seiner Entriegelungsstellung in seine Sperrstellung geschwenkt wird. Dabei wird der Sperrstift 35 von dem Bund des ersten Bolzens 32 entfernt, so daß dieser unter der Wirkung der ersten Feder 37 sich vertikal nach unten bewegen kann. Dabei schlägt der erste Bolzen 32 mit seiner Unterkante auf den sich quer erstreckenden Bereich des Hebels 36, wodurch dieser nach unten in eine Schräglage ausgelenkt wird. Die Geradführung des ersten Bolzens 32 bei seiner axialen Bewegung wird mit Hilfe einer im Exzenterbolzen vorgesehenen Vertikalnut 321 erreicht, in die der Sperrstift 35 eingreifen kann. Nach dem Anschlagen des ersten Bolzens 32 auf dem sich quer erstreckenden Teil des Hebels 36 kann der weitere Bolzen 61 formschlüssig mit dem ersten Bolzen 32 in Eingriff gelangen, wodurch der zweite Hebel 6 in seine Verriegelungsstellung einschnappt. In dieser Stellung signalisiert er "Verriegelung". Dadurch kann sich der erste Bolzen 32 nicht mehr nach oben bewegen, so daß die Befestigungsvorrichtung sich in ihrer Verriegelungsstellung für den zweiten Bolzen 51 befindet.

In dieser Verriegelungsstellung erfolgt dann das Spannen durch Drehen des ersten Bolzens 32 gegen den Uhrzeigersinn mit Hilfe des Steckschlüssels, wobei ein Zurückdrehen des ersten Bolzens während des Spannvorganges durch die Rasteinrichtung 34, 35 verhindert wird.

Soll der zweite Bolzen 51 wieder gelöst werden, so erfolgt der eingangs erläuterte Entspannungs- und Entriegelungsvorgang.

Sind keine Teile mit dem Fahrzeug über die Befestigungsvorrichtung 3 verbunden, so soll anstelle des zweiten Bolzens 51 ein hier nicht gezeigter Blindstopfen in das Kupplungsmaul 31 eingeführt werden, um eine Verschmutzung oder Beschädigung der Befestigungsvorrichtung zu verhindern.

## Patentansprüche

1. Befestigungsvorrichtung für ein lösbar an einem Kraftfahrzeug anbringbares Teil, insbesondere eine Anhängerkupplung, das auf das Kraftfahrzeug Zug- und Druckkräfte überträgt, mit einem am Kraftfahrzeug fest angebrachten Aufnahmeteil und einem mit diesem verspannbaren Eingriffsteil, das mit dem anbringbaren Teil verbunden ist, **dadurch gekennzeichnet,** daß
das Aufnahmeteil (3) ein Kupplungsmaul (31) und einen das Kupplungsmaul (31) durchsetzenden, sich in im wesentlichen vertikaler Richtung erstreckenden ersten Bolzen (32) aufweist,
das Eingriffsteil (5, 51) einen in das Kupplungsmaul (31) einführbaren zweiten Bolzen (51) aufweist, der sich in im wesentlichen horizontaler Richtung erstreckt und eine Öffnung (52) hat, durch die hindurch sich der erste Bolzen (32) in der Verriegelungsstellung des Eingriffsteils (5, 51) erstreckt,
der erste Bolzen (32) im Bereich der Öffnung (52) des zweiten Bolzens (51) einen Exzenter (33) aufweist,
der erste Bolzen (32) mit Hilfe einer ersten Feder (37) in Richtung seiner Spannstellung vorgespannt ist,
eine in Wirkstellung eine Drehung des ersten Bolzens (32) nur in eine Richtung zulassende lösbare Rasteinrichtung (34, 35) vorgesehen ist,
das Kupplungsmaul (31) und das Eingriffsteil (5, 51) miteinander korrespondierende Spannflächen jeweils aufweisen, und
ein in einer im wesentlichen vertikalen Ebene schwenkbarer Hebel (36) eine Anschlagkante (38) hat, die mit dem zweiten Bolzen (51) derart zusammenwirkt, daß der Hebel (36) beim Einführen des zweiten Bolzens (51) in das Kupplungsmaul (31) aus seiner Entriegelungsstellung in seine Sperrstellung selbsttätig verschwenkbar ist.

2. Befestigungsvorrichtung nach Anspruch 1, **dadurch gekennzeichnet,** daß die Rasteinrichtung (34, 35) auf der Mantelfläche des ersten Bolzens (32) ausgeformte Zähne (34) und einen mit diesen zusammenwirkenden Sperrstift (35) aufweist, der zum Lösen der Rasteinrichtung (34, 35) in einer sich in im wesentlichen horizontaler Richtung erstreckenden Bohrung geführt ist.

3. Befestigungsvorrichtung nach Anspruch 2, **dadurch gekennzeichnet,** daß im Hebel (36) die Bohrung für den Sperrstift (35) ausgebildet ist.

4. Befestigungsvorrichtung nach Anspruch 3, **dadurch gekennzeichnet,** daß der Hebel (36) in einer Sperrstellung eine vertikale Verschiebung des ersten Bolzens (32) aus dessen Spannstellung, in der die Rasteinrichtung (34, 35) wirksam ist, und in einer Entriegelungsstellung bei angehobenem ersten Bolzen (32) dessen Abwärtsbewegung verhindert.

5. Befestigungsvorrichtung nach einem der Ansprüche 1 bis 4, **dadurch gekennzeichnet,** daß der Hebel (36) von einer zweiten Feder (39) in Richtung seiner Entriegelungsstellung vorgespannt ist.

6. Befestigungsvorrichtung nach einem der Ansprüche 1 bis 5, **dadurch gekennzeichnet,** daß ein zweiter Hebel (6) in einer im wesentlichen vertikalen Ebene schwenkbar am Aufnahmeteil (3) so angelenkt ist, daß seine Schwenkebene etwa senkrecht zur Schwenkebene des ersten Hebels (36) verläuft, daß der zweite Hebel (6) mit einem weiteren Bolzen (61) verbunden ist, der mit dem ersten Bolzen (32) so zusammenwirkt, daß er eine Vertikalbewegung des ersten Bolzens (32) in seiner Spannstellung verhindert, wenn sich der zweite Hebel (6) in seiner am Aufnahmeteil (3) anliegenden Verriegelungsstellung befindet, und eine Vertikalbewegung des ersten Bolzens (32) zuläßt, wenn der zweite Hebel (6) von Hand in eine Entriegelungsstellung vom Aufnahmeteil (3) fortgeschwenkt ist.

7. Befestigungsvorrichtung nach einem der Ansprüche 1 bis 6, **dadurch gekennzeichnet,** daß der erste Bolzen (32) an seinem oberen Ende eine Durchsteckbohrung (32a) zur Aufnahme eines Steckschlüssels aufweist.

8. Befestigungsvorrichtung nach einem der Ansprüche 1 bis 7, **dadurch gekennzeichnet,** daß das Eingriffsteil (5, 51) eine Adapterplatte (5) aufweist, die zwei zweite Bolzen (51) trägt, von denen jeder einer Befestigungsvorrichtung (3) zugeordnet ist, und daß die anbringbaren Teile mit der Adapterplatte (5) verbunden sind.

## Claims

1. Mounting device for a component releasably attachable to a motor vehicle, in particular for a trailer coupling transmitting pulling and pushing forces to the motor vehicle, with a receiving part permanently fitted to the vehicle and an engaging part which can be clamped to the receiving part and which is connected to the component to be attached, characterized in that
the receiving part (3) has a coupling mouth (31) and a first pin (32) extending in an essentially vertical direction and passing through the coupling mouth (31),
the engaging part (5, 51) has a second pin (51) which can be inserted into the coupling mouth (31) and which extends in an essentially horizontal direction and has a bore (52) through which the first pin (32) extends in the locked position of the engaging part (5, 51),
the first pin (32) has an eccentric cam (33) in the region of the bore (52) in the second pin (51),
the first pin (32) is urged by means of a first spring (37) towards its clamped position,
a releasable catch (34, 35) is provided which in the operative position allows the first pin (32) to be turned in one direction only,
the coupling mouth (31) and the engaging part (5, 51) both have mating clamping surfaces, and
a lever (36) which is pivotable in an essentially vertical plane has a striking edge (38) which interacts with the second pin (51) so that the lever (36) can pivot automatically from its unlocked position to its locked position when the second pin (51) is inserted into the coupling mouth (31).

2. Mounting device according to Claim 1, characterized in that the catch (34, 35) comprises teeth (34) formed on the lateral surface of the first pin (32) and a locking pin (35) cooperating with these teeth which is guided in a bore extending in an essentially horizontal direction for releasing the catch (34, 35).

3. Mounting device according to Claim 2, characterized in that the bore for the locking pin (35) is provided in the lever (36).

4. Mounting device according to Claim 3, characterized in that the lever (36) in a locking position prevents the first pin (32) from shifting vertically out of its clamped position in which the catch (34, 35) is operated, and in an unlocking position with the first pin (32) raised prevents it from moving downwards.

5. Mounting device according to one of Claims 1 to 4, characterized in that the lever (36) is urged by a second spring (39) towards its unlocking position.

6. Mounting device according to one of Claims 1 to 5, characterized in that a second lever (6) is linked to the receiving part (3) so as to be pivotable in an essentially vertical plane so that its pivoting plane is essentially perpendicular to the pivoting plane of the first lever (36), [and in] that the second lever (6) is connected to another pin (61) which cooperates with the first pin (32) so as to prevent vertical movement of the first pin (32) when in its clamped position, when the second lever (6) is in its locked position in which it rests against the receiving part (3), and so as to allow vertical movement of the first pin (32) when the second lever (6) is manually tilted away from the receiving part (3) to an unlocking position.

7. Mounting device according to one of Claims 1 to 6, characterized in that the first pin (32) has a through bore (32a) at its upper end to receive a key.

8. Mounting device according to one of Claims 1 to 7, characterized in that the engaging part (5, 51) has an adapter plate (5) which carries two second pins (51) each of which is assigned to a mounting device (3), and in that the attachable components are connected to the adapter plate (5).

## Revendications

1. Dispositif de fixation pour une pièce montée de manière amovible sur un véhicule automobile, en particulier pour un attelage de remorque, qui transmet des forces de traction et de pression au véhicule automobile, comprenant une pièce de réception montée rigidement sur le véhicule automobile et une pièce d'engagement qui peut être bloquée avec ladite pièce de réception et est reliée à la pièce amovible, caractérisé en ce que
- la pièce de réception (3) présente une gorge d'accouplement (31) et une première goupille (32) qui traverse la gorge d'accouplement (31) et s'étend pour l'essentiel verticalement,
- la pièce d'engagement (5, 51) présente une deuxième goupille (51) qui peut être introduite dans la gorge d'accouplement (31), s'étend pour l'essentiel horizontalement et possède une ouverture (52) que traverse la première goupille (32) dans la position de verrouillage de la pièce d'engagement (5, 51),
- la première goupille (32) présente un excentrique (33) dans la zone de l'ouverture (52) de la deuxième goupille (51),
- la première goupille (32) est prétendue à l'aide d'un premier ressort (37) en direction de sa position de serrage,
- il est prévu un dispositif d'arrêt (34, 35) mobile autorisant en position active une rotation de la première goupille (32) uniquement dans une direction,
- la gorge d'accouplement (31) et la pièce d'engagement (5, 51) présentent chacune des surfaces de serrage correspondant les unes avec les autres, et
- un levier (36) pouvant pivoter dans un plan sensiblement vertical possède un bord de butée (38) qui coopère avec la deuxième goupille (51) de telle manière que le levier (36) puisse pivoter automatiquement de sa position de déverrouillage dans sa position de blocage lors de l'introduction de la deuxième goupille (51) dans la gorge d'accouplement (31).

2. Dispositif de fixation selon la revendication 1, caractérisé en ce que le dispositif d'arrêt (34, 35) présente des dents (34) formées sur la surface d'enveloppe de la première goupille (32) et une broche d'arrêt (35) qui coopére avec lesdites dents et est guidée dans un perçage s'étendant pour l'essentiel en direction horizontale pour libérer le dispositif d'arrêt (34, 35).

3. Dispositif de fixation selon la revendication 2, caractérisé en ce que le perçage pour la broche d'arrêt (35) est réalisé dans le levier (36).

4. Dispositif de fixation selon la revendication 3, caractérisé en ce que le levier (36) empêche dans une position de blocage un déplacement vertical de la première goupille (32) hors de sa position de serrage dans laquelle le dispositif d'arrêt (34, 35) est actif, et dans une position de déverrouillage, un déplacement vers le bas de la première goupille (32) se trouvant alors en position haute.

5. Dispositif de fixation selon l'une des revendications 1 à 4, caractérisé en ce que le levier (36) est prétendu par un deuxième ressort (39) en direction de sa position de déverrouillage.

6. Dispositif de fixation selon l'une des revendications 1 à 5, caractérisé en ce qu'un deuxième levier (6) est articulé sur la pièce de réception (3) avec possibilité de pivoter dans un plan sensiblement vertical de telle manière que son plan de pivotement soit à peu près perpendiculaire au plan de pivotement du premier levier (36), que le deuxième levier (6) est relié à une autre goupille (61) qui coopère avec la première goupille (32) de telle manière qu'elle empêche un déplacement vertical de la première goupille (32) dans sa position de serrage lorsque le deuxième levier (6) se trouve dans sa position de verrouillage en appui contre la pièce de réception (3) et autorise un déplacement vertical de la première goupille (32) lorsque l'on éloigne manuellement le deuxième levier (6) de la pièce de réception (3) en le faisant pivoter dans une position de déverrouillage.

7. Dispositif de fixation selon l'une des revendications 1 à 6, caractérisé en ce que la première goupille (32) présente à son extrémité supérieure un trou de passage (32a) pour recevoir une clé à douille.

8. Dispositif de fixation selon l'une des revendications 1 à 7, caractérisé en ce que la pièce d'engagement (5, 51) présente une plaque d'adaptation (5) qui porte deux deuxièmes goupilles (51) qui sont chacune associées à un dispositif de fixation (3) et en ce que les pièces amovibles sont reliées à la plaque d'adaptation (5).
